# EUROPEAN PATENT SPECIFICATION

(11) **EP 0 193 025 B1**
(45) Date of publication and mention of the grant of the patent: **12.05.1993**
(21) Application number: 86101747.3
(22) Date of filing: 12.02.1986
(51) Int. Cl.: G01J 5/04, A23N 12/12

(54) **System for measuring the temperature of a batch of coffee beans during roasting**
Vorrichtung zur Messung der Temperatur einer Ladung Kaffeekörner während der Röstung
Système de mesure de la température d'un lot de grains de café pendant la torréfaction

(30) Priority: 21.02.1985 IT 1959885
(43) Date of publication of application: 03.09.1986
(73) Proprietor: ILLYCAFFE S.p.A., I-34147 Trieste (IT)
(72) Inventor: Illy, Ernesto, I-34147 Trieste (IT)
(74) Representative: Ferraiolo, Ruggero

(56) References cited:
- EP-A- 0 081 245
- GB-A- 2 088 049
- US-A- 4 325 191

## Description

The present invention concerns a system for measuring the temperature of a batch of coffee beans while being roasted.

It is known that, during roasting, the temperature of the coffee beans must be carefully and continually checked and that, according to the state of the art, the temperature is measured by thermometers or thermocouples placed in contact with the beans.

Document US-A-4,325,191 discloses a coffee roaster which comprises a rotating drum wherein the coffee beans are stirred and roasted and a temperature sensing device facing the interior of said rotating drum to detect the surface temperature of the coffee beans.

The chief drawbacks affecting the state of the art lie in the fact that thermometers and thermocouples are sensitive to the temperature of the gases circulating in the roasting environment and among the beans, and present a certain degree of thermic inertia due to their protective casing.

The system conforming to the invention comprises: a collecting means, within a coffee roasting drum, receiving the shower of coffee beans and able to offer a continuously re-newed surface of beans so that a fresh sample is always present, and an instrument suitable for constant measurement of the temperature of the above sample by means of the infrared radiations emitted by said sample.

The instrument suitable for measuring the temperature is placed within a tube-shaped casing the longitudinal axis of which is directed towards the above sampling surface. As already known, said casing contains both an optical system which concentrates the infrared radiations, penetrating through one open end of the casing, on the above instrument, and a pipe carrying compressed air the purpose of which is to maintain the parts inside the casing at an acceptable level of temperature.

As is also known, the instrument for measuring temperature is associated to a device suitable for converting the detected infrared radiations into a number indicating the temperature, and to a system which controls operation of the roasting apparatus acting on the temperature and on the volume of air entering it in accordance with the temperature detected by the instrument.

The advantages of the system invented consist in the fact that the instrument measuring the temperature has an extremely high speed of response, that the above instrument is not subject to wear, since it is not in contact with the coffee beans, and that it is not affected by emission of the infrared radiations produced by the gases inside the environment where roasting is done. Further, the collecting means ensures that the temperature found is that of a representative sample of all the coffee beans inside the drum.

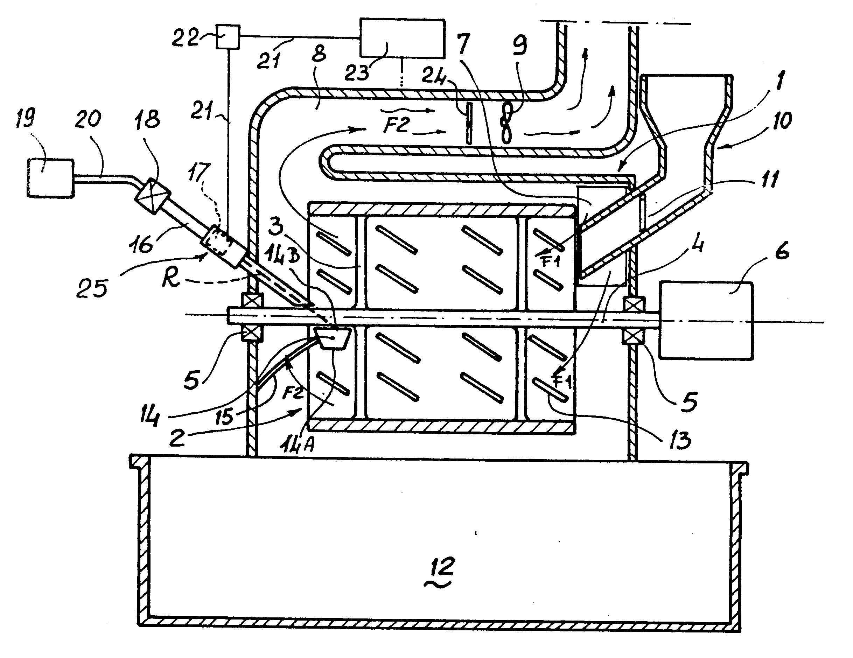

A more detailed explanation of the invention is given below with the aid of the drawing which shows one example of its embodiment.

An oven 1 with air heated to 220°C comprises: a drum 2 fixed by bars 3 to its shaft 4 sustained at the ends by bearings 5, driven by a motor 6; a mouth 7 for entry of air heated by a suitable hot-air generator; a pipe 8 through which a fan 9 sucks up hot air together with the volatile products of coffee bean roasting; a device 10 for supplying the rotating drum with raw coffee beans,having an automatically operated valve 11 for controlling the supply of beans; a tank 12 in which the roasted beans fall there to be cooled by a draught of air. The internal surface of the drum 2 is fitted with blades 13 for lifting the coffee beans upwards from where they fall down again to the bottom. A funnel 14 is held by an arm 15 fixed to the inside of the oven 1, in a position within the drum 2; the funnel 14 is shaped like a vertically placed truncated cone, open above and below, and is so shaped that the quantity of coffee beans falling down through the lower opening 14A within a certain space of time is the same as the quantity of beans received into the upper opening 14B within the same space of time. In these circumstances the surface of the beans at the level of the upper opening appears immobile while in actual fact the beans forming said surface are continually changing and the funnel acts as a continuous means of sampling the the coffee beans being roasted inside the drum.

Inside the oblong casing 16 there is a type G 30 infrared radiation thermometer 17 made by Land Pyrometers Ltd. of Dronfield (GB), associated, within said oblong casing, to an optical system comprising a filter which only permits passage of the radiation beams emitted by the coffee and not by the gases, and associated to an electronic preamplifier. This group of elements is indicated by 25. It will be seen that the lower end of the oblong casing 16 is open near to the upper surface of the funnel 14, so that a beam of infrared radiations R,emitted by the hot beans in the funnel, reaches the optical system. The upper end of the oblong casing receives a draught of air filtered by a filter 18, supplied by a source of compressed air 19 through a pipe 20. The unit comprising the infrared radiation thermometer, the optical system and the electronic amplifier is fitted with an electric feeder and generator of a normalized signal from 4 to 20 mA passed to a system that controls the roasting apparatus acting on the temperature and on the volume of air entering the oven 1 through the mouth 7. The figure shows, in extremely diagrammatical fashion, the connection 21 of the thermometer forming part of the unit 17 to the group 22 of the electric feeder and normalized signal generator and from there to a system 23 that controls the roasting apparatus.

The arrows F1 indicate the path taken by the hot air which, from the mouth 7 enters the drum 2 from the right hand side of the drawing, while the arrows F2 represent the path of hot air with volatile roasting products which leaves the drum and is sucked into pipe 8. A butterfly valve 24 can be worked to regulate passage of hot air with volatile roasting products in the pipe 8.

## Claims

1. System for measuring the temperature of a batch of coffee beans during roasting wherein said batch is stirred and roasted in a roasting drum (2) and an instrument (17) measures the temperature of said batch characterized in that
- a collecting means (14) is mounted within the roasting drum (2) for receiving a sample of said batch and is so made as to present a surface of coffee beans which is continually renewed so that a fresh sample of beans is always present on said surface,
- said instrument (17) has infrared detection means and measures, continuously, the temperature of said sample of coffee beans by detecting the infrared radiation emitted by said sample of coffee beans.

2. System according to claim 1 characterized in that said collecting means (14) is a funnel placed vertically and having an upper opening (14B) and a lower opening (14A) of such a shape and size that the quantity of coffee beans dropping out of the lower opening (14A) is the same as the quantity simultaneously falling into the upper opening (14B) and in that said instrument (17) is contained in a tubular casing (16), the longitudinal axis of which casing is so directed that one end of said casing (16) faces the sample of coffee beans, said end being open and positioned at a distance from said sample of coffee beans.

## Patentansprüche

1. System zum Messen der Temperatur einer Charge von Kaffeebohnen während des Röstens, bei dem die Charge in einer Rösttrommel (7) gerührt und geröstet wird und ein Instrument (17) die Temperatur der Charge mißt, dadurch gekennzeichnet, daß
- eine Fangvorrichtung (14) zur Aufnahme einer Probenmenge der Charge in der Rösttrommel (2) angeordnet und so ausgebildet ist, daß sie eine ständig erneuerte Oberfläche von Kaffeebohnen präsentiert, so daß an dieser Oberfläche eine frische Probenmenge von Bohnen vorhanden ist,
- und daß das Instrument (17) einen Infrarotdetektor aufweist und kontinuierlich die Temperatur der Probenmenge von Kaffeebohnen durch Detektieren der von ihr emittierten Infrarotstrahlung mißt.

2. System nach Anspruch 1 , dadurch gekennzeichnet , daß die Fangvorrichtung (14) ein vertikal angeordneter Trichter ist und eine obere Öffnung (14B) und eine untere Öffnung (14A) von solcher Form und Größe hat, daß die aus der unteren Öffnung (14) herausfallende Menge von Kaffeebohnen gleich der gleichzeitig in die obere Öffnung (14B) fallenden Menge ist, und daß das Instrument (17) in einem rohrförmigen Gehäuse (16) enthalten ist, dessen Längsachse so gerichtet ist, daß ein Ende des Gehäuses (16) der Probenmenge von Kaffeebohnen gegenüberliegt, wobei dieses Ende offen und in einem Abstand von der Probenmenge von Kaffeebohnen angeordnet ist.

## Revendications

1. Dispositif pour mesurer la température d'un lot de grains de café durant la torréfaction dans lequel ledit lot est remué et torréfié dans un tambour de torréfaction (2) et un instrument (17) mesure la température dudit lot, caractérisé en ce que
- Un organe de rassemblement (14) est monté à l'intérieur du tambour de torréfaction (2) pour recevoir un échantillon dudit lot et est fait de telle façon qu'il présente une surface des grains de café qui est continuellement renouvelée de telle sorte qu'un échantillon frais de grains est toujours présent sur ladite surface,
- ledit instrument (17) a des moyens de détection à infrarouges et mesure, continuellement, la température dudit échantillon de grains de café en détectant les rayonnements infrarouges émis par ledit échantillon de grains de café.

2. Dispositif selon la revendication 1, caractérisé en ce que l'organe de rassemblement (14) est un entonnoir placé verticalement et ayant une ouverture supérieure (14B) et une ouverture inférieurs (14A) d'une forme telle et d une taille telle que la quantité des grains de café s'écoulant hors de l'ouverture inférieure (14a) est la même que la quantité qui tombe de façon simultanée dans l'ouverture supérieure (14b) et en ce que ledit instrument (17) est contenu dans un bâti tubulaire (16), dont l'axe longitudinal est dirigé de telle façon qu'une extrémité dudit bâti (16) soit en face de l'échantillon des grains de café, ladite extrémité étant ouverte et positionnée à une distance dudit échantillon de grains de café.
